# FASCICULE DE BREVET EUROPEEN

(11) **EP 1 304 292 B1**
(45) Date de publication et mention de la délivrance du brevet: **11.05.2005**
(21) Numéro de dépôt: 02362017.2
(22) Date de dépôt: 16.10.2002
(51) Int. Cl.: B65B 43/54, B65G 21/20

(54) **Dispositif de maintien et de positionnement d'un sac**
Vorrichtung zum halten und Positionieren eines beutels
Device for holding and positioning a bag

(30) Priorité: 22.10.2001 FR 0113614
(43) Date de publication de la demande: 23.04.2003
(73) Titulaire: Cetec Industrie Conditionnement, 24650 Chancelade (FR)
(72) Inventeur: Labrue, Jean-Claude, 24460 Agonac (FR)
(74) Mandataire: Thébault, Jean-Louis

(56) Documents cités:
- WO-A-00/59813
- US-A- 5 682 976

## Description

La présente invention se rapporte à un dispositif de maintien et de positionnement d'un sac, prévu notamment pour une chaîne d'ensachage.

Pour le conditionnement de matière en vrac, on utilise souvent des sacs, formant une enveloppe souple, constitués chacun d'un fond 10, de parois latérales 12 ouvertes en partie supérieure avant le remplissage, puis fermées par toute technique appropriée.

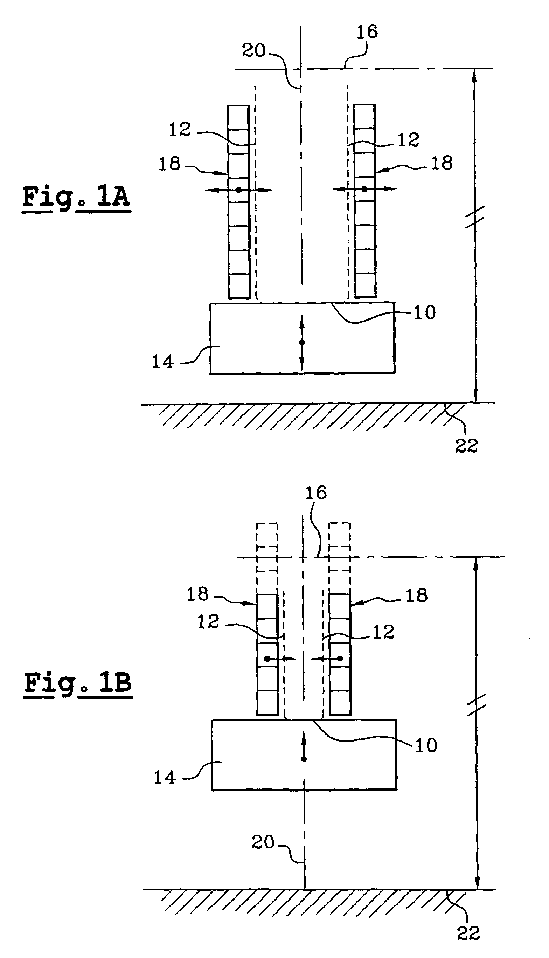

Ces sacs sont généralement stockés dans un magasin en amont de la chaîne d'ensachage, puis sont saisis par un ou des actionneurs de manière à les disposer les uns à la suite des autres sur un convoyeur 14 de manière à les faire défiler au droit de moyens 16 prévus pour le remplissage et/ou la fermeture desdits sacs schématiquement représentés par un trait mixte sur les figures 1 A et 1 B.

Le convoyeur 14 peut être selon les cas, un convoyeur à bande ou bien une surface lisse sur laquelle glissent les sacs poussés par des actionneurs.

Des moyens 18 de maintien et de positionnement sont également prévus pour assurer le positionnement des sacs par rapport à un plan médian 20 matérialisé par un trait mixte. Selon un mode de réalisation, ils sont constitués de rambardes superposées qui sont disposées de manière symétrique par rapport au plan médian 20. Selon l'art antérieur, les moyens 18 de maintien et de positionnement sont liés cinématiquement avec le convoyeur 14, comme cela sera expliqué ultérieurement.

Lors des différentes étapes de l'ensachage, il est important de positionner parfaitement la tête du sac, c'est-à-dire les bords supérieurs des parois latérales, par rapport aux moyens de remplissage et/ou de fermeture.

Selon une autre caractéristique, pour des raisons économiques évidentes, ces chaînes d'ensachage doivent s'adapter à différents formats de sacs, comme illustré par les figures 1A et 1B, en prenant soin de conserver, quelle que soit la taille du sac, sa tête toujours dans la même position par rapport aux moyens 16 de remplissage et de fermeture, ces derniers étant fixes par rapport à un référentiel ou bâti 22 matérialisé schématiquement par des hachures.

Selon l'art antérieur, le convoyeur 14 ainsi que les moyens 18 de maintien et de positionnement sont susceptibles de se translater verticalement, de préférence de manière liée, en fonction du format du sac, en fonction du format du sac, lesdits moyens 18 étant susceptibles de se translater horizontalement en s'écartant plus ou moins en fonction de la taille du sac de l'axe médian 20.

Pour des raisons d'encombrement, il est nécessaire de réduire les dimensions des moyens 18 de maintien et de positionnement de manière à ce que ces derniers n'interfèrent pas avec les moyens 16 de remplissage et de fermeture. Concrètement, un opérateur doit retirer certaines rambardes formant les moyens 18 comme illustré en pointillé sur la figure 1 B, et éventuellement les actionneurs nécessaires pour pousser les sacs.

Cette opération non mécanisée nécessite l'intervention d'un ou plusieurs opérateurs et l'arrêt de la chaîne d'ensachage pendant un laps de temps non négligeable de manière à la configurer pour un autre format de sac, ce qui contribue à réduire sa productivité.

La présente invention vise à pallier les inconvénients de l'art antérieur en proposant une chaîne d'ensachage de conception nouvelle, simple, visant à supprimer tout démontage manuel lors d'un changement de formats de sac, et contribuant à améliorer la productivité de ladite chaîne.

A cet effet, l'invention a pour objet un dispositif assurant le défilement d'objets susceptibles d'être positionnés en hauteur et par rapport à un axe vertical, comprenant un convoyeur sur lequel se translatent des objets et des moyens de maintien et de positionnement constitués de deux surfaces, disposées chacune d'elles de part et d'autre de l'axe vertical, caractérisé en ce qu'au moins l'une des deux surfaces est constituée d'au moins deux parties dont la partie inférieure est susceptible de s'escamoter de manière à permettre le logement d'au moins une partie du convoyeur au droit desdits moyens de maintien et de positionnement.

De préférence, au moins l'une des surfaces est constituée d'éléments superposés.

Cet agencement est plus particulièrement adapté à une chaîne d'ensachage comprenant des moyens de remplissage et/ou de fermeture, un convoyeur sur lequel se translatent des sacs, de préférence les uns derrière les autres, et des moyens de maintien et de positionnement constitués de deux surfaces, disposées chacune d'elles de part et d'autre d'un axe vertical, caractérisée en ce qu'au moins l'une des deux surfaces est constituée d'au moins deux parties dont la partie inférieure est susceptible de s'escamoter de manière à permettre le logement d'au moins une partie du convoyeur au droit desdits moyens de maintien et de positionnement.

Comme précédemment, au moins l'une des surfaces est constituée d'éléments superposés, appelés rambardes.

Selon une caractéristique, les rambardes d'au moins une des surfaces sont cinématiquement liées et sont rapportées toutes sur un support susceptible de se translater horizontalement.

Selon une autre caractéristique, certaines rambardes d'au moins une surface sont cinématiquement indépendantes, et peuvent se translater horizontalement par rapport à un support lui-même susceptible de se translater horizontalement.

D'autres caractéristiques et avantages ressortiront de la description qui va suivre du dispositif de l'invention, description donnée à titre d'exemple uniquement, en regard des dessins annexés sur lesquels:
- la figure 1A est une vue schématique en coupe transversale d'une chaîne d'ensachage de l'art antérieur utilisant un premier format de sac,
- la figure 1B est une vue schématique en coupe transversale de la même chaîne d'ensachage utilisant un second format de sac,
- la figure 2A est une vue schématique en coupe transversale d'une chaîne d'ensachage selon l'invention utilisant un premier format de sac,
- la figure 2B est une vue schématique en coupe transversale de la chaîne d'ensachage de la figure 2A utilisant un second format de sac,
- La figure 3A est une coupe transversale d'un mode de réalisation de l'invention utilisant un premier format de sac, et
- la figure 3B est une coupe transversale du mode de réalisation de la figure 3A utilisant un second format de sac.

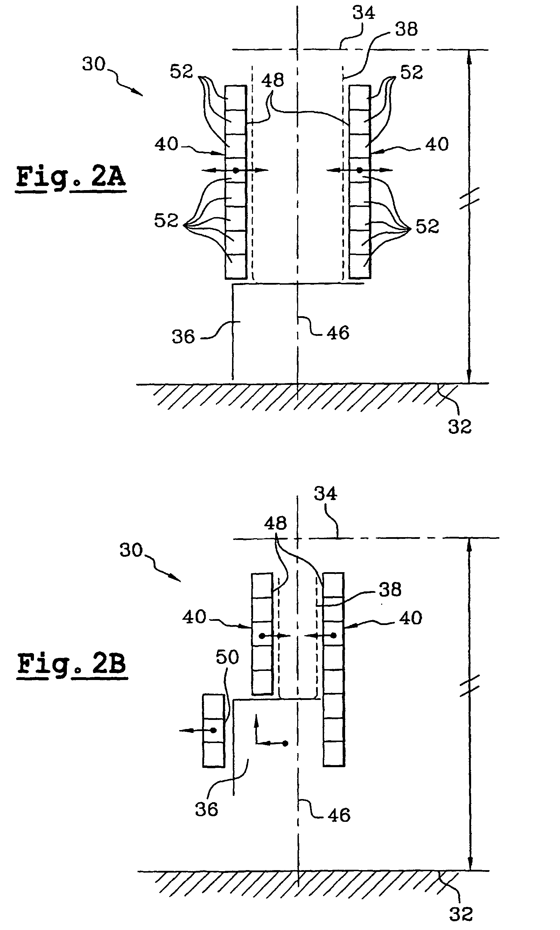

Sur les figures 2A et 2B, on a représenté de manière schématique une chaîne d'ensachage 30 selon une coupe transversale. Elle comprend un bâti 32 schématiquement représenté par des hachures, des moyens 34 de remplissage et/ou de fermeture schématiquement représenté par un trait mixte, un convoyeur 36 sur lequel se translatent des sacs 38, de préférence les uns derrière les autres, ainsi que des moyens 40 de maintien et de positionnement.

Comme pour l'art, les moyens 34 de remplissage et/ou de fermeture sont de préférence sensiblement immobiles par rapport au bâti 32.

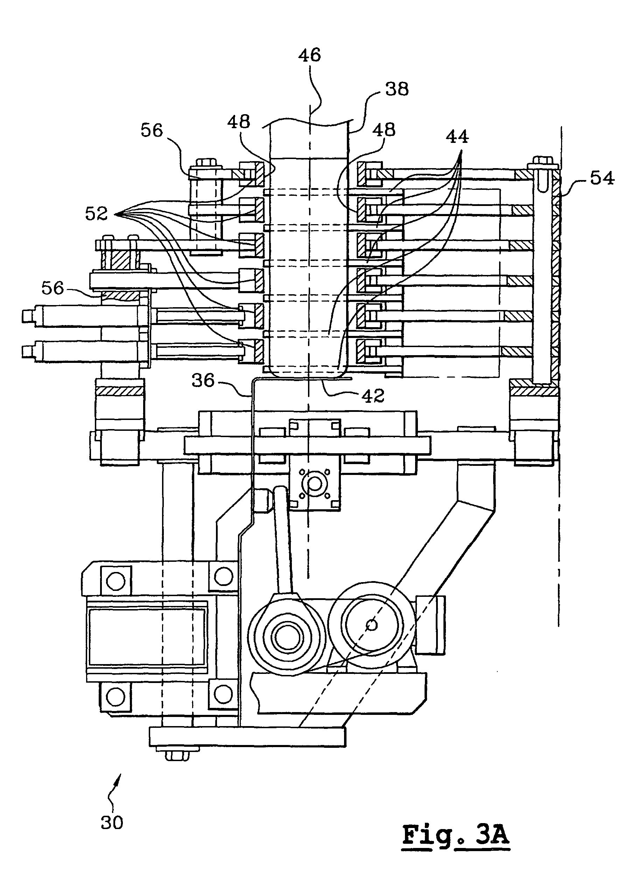

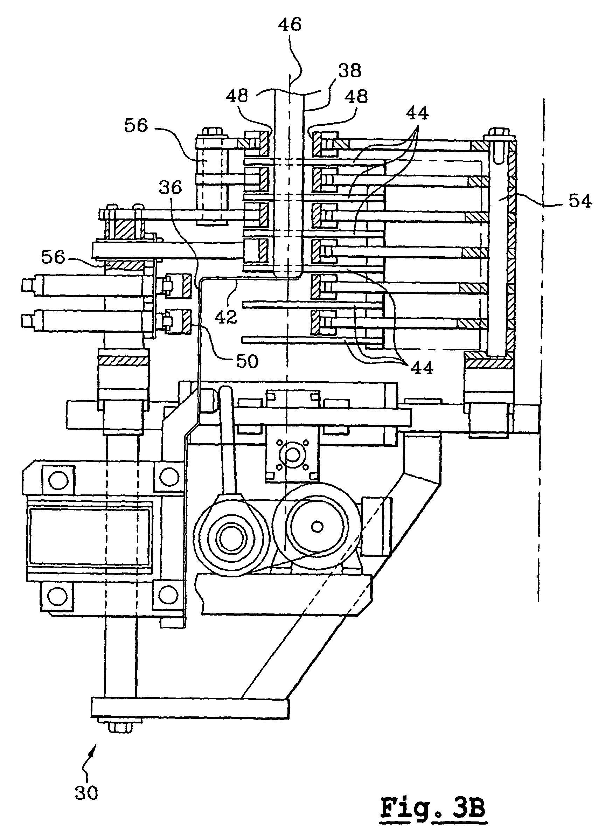

De même, le convoyeur 36 peut être un convoyeur à bande ou une plaque lisse 42 sur laquelle glissent les sacs 38 poussés par des actionneurs 44, de préférence un pour chaque sac, comme illustré par les figures 3A et 3B.

Avantageusement, le convoyeur 36 a une largeur supérieure à l'écartement des moyens 40 de maintien et de positionnement prévu pour le plus grand format de sac, comme illustré par la figure 2A.

Par rapport au bâti 32, le convoyeur 36 est susceptible de se translater verticalement pour assurer le positionnement en hauteur du sac par rapport aux moyens 34 de remplissage et/ou de fermeture, et éventuellement horizontalement de manière à se positionner par rapport aux moyens 40, comme cela sera expliqué ultérieurement.

Les moyens 40 de maintien et de positionnement assurent le maintien des parois latérales des sacs 38 et le positionnement de la tête du sac par rapport aux moyens 34 de remplissage et/ou de fermeture, le sac ou les sacs étant disposé(s) de manière sensiblement symétrique par rapport à un axe vertical médian 46. Ils sont susceptibles en fonction du format du sac de s'écarter plus ou moins de l'axe vertical, médian 46 et comprennent deux surfaces 48, disposées chacune de part et d'autre de l'axe médian 46.

Selon l'invention, les moyens 40 de maintien et de positionnement sont cinématiquement indépendants du convoyeur 36, et chaque surface 48 est susceptible de se translater sensiblement horizontalement de manière à s'éloigner plus ou moins de l'axe vertical médian 46, au moins l'une des deux surfaces 48 étant constituée d'au moins deux parties dont la partie inférieure 50 est susceptible de s'escamoter de manière à permettre le logement d'au moins une partie du convoyeur 36 au droit desdits moyens 40.

Selon cet agencement, il est possible d'assurer le positionnement des sacs d'au moins deux formats sans avoir à démonter la partie supérieure des moyens 40 de maintien et de positionnement.

De manière avantageuse, au moins l'une des surfaces 48 est constituée d'éléments superposés 52, joints ou disjoints de manière à laisser passer les doigts d'un actionneur 44 comme illustré par les figures 3A et 3B.

Cet agencement permet d'adapter aisément la chaîne d'ensachage à de nombreux formats de sacs, la hauteur des différents éléments 52 étant adaptée aux différents formats de sacs susceptibles d'être admis par ladite chaîne.

Selon un mode de réalisation préféré et illustré par les figures 3A et 3B, chaque surface 48 est constituée d'éléments superposés disjoints, appelés rambardes.

Les rambardes 52 d'une des surfaces 48, par exemple celle de droite sur les figures, sont cinématiquement liées et sont rapportées toutes sur un support 54, ce dernier étant susceptible de se translater horizontalement par rapport au bâti 32.

En complément, les rambardes 52 de l'autre surface 48, celle de gauche, sont cinématiquement indépendantes, et peuvent se translater horizontalement par rapport à un support 56 lui-même susceptible de se translater horizontalement par rapport au bâti 32. Avantageusement, le support 56 est réalisé en deux parties, une partie supérieure sur laquelle sont rapportées de manière fixe des rambardes, et une partie inférieure sur laquelle sont rapportées des rambardes mobiles par rapport à ladite partie.

Le principe de fonctionnement du dispositif de l'invention est maintenant expliqué au regard des différentes figures.

Sur les figures 2A et 3A, la chaîne d'ensachage est configurée pour un grand format de sac, les moyens 40 de maintien et de positionnement sont disposés de part et d'autre et de manière sensiblement symétrique par rapport à l'axe vertical médian 46. Le convoyeur 36 est disposé en dessous des moyens 40 de maintien et de positionnement, de manière sensiblement symétrique par rapport à l'axe vertical médian 46. Les sacs défilent les uns à la suite des autres poussés par des actionneurs 44.

Pour adapter la chaîne d'ensachage à un autre format de sac comme illustré par les figures 2B et 3B, au moins l'une des parties inférieures des moyens 40 de maintien et de positionnement se translate de manière à s'écarter par rapport à l'axe médian 46 de manière à libérer un espace dans lequel est susceptible de se loger au moins une partie du convoyeur 36. Les parties restantes des moyens 40 de maintien se translatent vers l'axe médian 46 de manière à assurer un positionnement correct de sacs de plus petit format par rapport à l'axe médian 46.

De manière à assurer un positionnement correct des sacs en hauteur, le convoyeur 36 se translate verticalement. Pour permettre son insertion entre les moyens 40, le convoyeur 36 se translate légèrement horizontalement, vers la partie inférieure desdits moyens 40 éloignée de l'axe médian.

En variante, les parties inférieures des deux surfaces 48 peuvent s'écarter de manière à libérer un espace pour loger une partie du convoyeur 36. Dans ce cas, ce dernier peut se translater uniquement de manière verticale.

Bien entendu, l'invention n'est évidemment pas limitée au mode de réalisation représenté et décrit ci-dessus, mais en couvre au contraire toutes les variantes, notamment en ce qui concerne les dimensions et matériaux des différents éléments, les moyens de remplissage et de fermeture, le bâti, les actionneurs utilisés pour assurer les mouvements des différents éléments, ainsi que les formes et dimensions des sacs utilisés.

Enfin, l'invention peut s'adapter à tout dispositif assurant le défilement d'objets susceptibles d'être positionnés en hauteur et par rapport à un axe médian.

## Revendications

1. Dispositif assurant le défilement d'objets susceptibles d'être positionnés en hauteur et par rapport à un axe vertical, comprenant un convoyeur (36) sur lequel se translatent des objets (38), et des moyens (40) de maintien et de positionnement des objets constitués de deux surfaces (48), disposées chacune d'elles de part et d'autre de l'axe vertical (46), **caractérisé en ce qu'**au moins l'une des deux surfaces (48) est constituée d'au moins deux parties dont la partie inférieure (50) est susceptible de s'escamoter en s'écartant par rapport à l'axe médian (46) de manière à permettre le logement d'au moins une partie du convoyeur (36) au droit desdits moyens (40) de maintien et de positionnement.

2. Dispositif selon la revendication 1, **caractérisé en ce qu'**au moins l'une des surfaces (48) est constituée d'éléments superposés (52).

3. Dispositif selon la revendication 2, **caractérisé en ce que** les éléments superposés (52), appelés rambardes, sont disjoints.

4. Dispositif selon l'une quelconque des revendications 1 à 3, **caractérisé en ce qu'**une seule surface (48) comprend au moins deux parties, et **en ce que** le convoyeur (36) est susceptible de se translater verticalement et horizontalement.

5. Dispositif selon l'une quelconque des revendications 1 à 3, **caractérisé en ce que** les deux surfaces (48) comprennent au moins deux parties , et **en ce que** le convoyeur (36) est susceptible de se translater au moins verticalement.

6. Chaîne d'ensachage comprenant des moyens (34) de remplissage et/ou de fermeture, un convoyeur (36) sur lequel se translatent des sacs (38), de préférence les uns derrière les autres, et des moyens (40) de maintien et de positionnement des sacs constitués de deux surfaces (48), disposées chacune d'elles de part et d'autre d'un axe vertical (46), **caractérisée en ce qu'**au moins l'une des deux surfaces (48) est constituée d'au moins deux parties dont la partie inférieure (50) est susceptible de s'escamoter en s'écartant par rapport à l'axe médian (46) de manière à permettre le logement d'au moins une partie du convoyeur (36) au droit desdits moyens (40).

7. Chaîne d'ensachage selon la revendication 6, **caractérisée en ce qu'**au moins l'une des surfaces (48) est constituée d'éléments superposés (52), appelés rambardes.

8. Chaîne d'ensachage selon la revendication 7, **caractérisée en ce que** les éléments superposés (52) sont disjoints.

9. Chaîne d'ensachage selon la revendication 7 ou 8, **caractérisée en ce que** les rambardes (52) d'au moins une des surfaces (48) sont cinématiquement liées et sont rapportées toutes sur un support (54) susceptible de se translater horizontalement.

10. Chaîne d'ensachage selon la revendication 7 ou 8, **caractérisée en ce que** certaines rambardes (52) d'au moins une surface (48) sont cinématiquement indépendantes, et peuvent se translater horizontalement par rapport à un support (56) lui-même susceptible de se translater horizontalement.

## Patentansprüche

1. Vorrichtung, die die Vorbeibewegung von Objekten gewährleistet, die auf gleicher Höhe und in Bezug auf eine vertikale Achse positioniert werden können, mit einer Fördereinrichtung (36), auf der sich die Objekte (38) translatorisch bewegen, und Mitteln (40) zum Halten und Positionieren der Objekte, die aus zwei Flächen (48) gebildet sind, die sich auf der einen bzw. der anderen Seite der vertikalen Achse (46) befinden, **dadurch gekennzeichnet, dass** wenigstens eine der zwei Flächen (48) aus wenigstens zwei Teilen gebildet ist, wovon der untere Teil (50) zurückfahren kann, indem er sich von der Mittelachse (46) entfernt, wodurch die Aufnahme wenigstens eines Teils der Fördereinrichtung (36) am Ort der Halteund Positionierungsmittel (40) ermöglicht wird.

2. Vorrichtung nach Anspruch 1, **dadurch gekennzeichnet, dass** wenigstens eine der Flächen (48) aus übereinander befindlichen Elementen (52) gebildet ist.

3. Vorrichtung nach Anspruch 2, **dadurch gekennzeichnet, dass** die übereinander befindlichen Elemente (52), die Relings genannt werden, unverbunden sind.

4. Vorrichtung nach einem der Ansprüche 1 bis 3, **dadurch gekennzeichnet, dass** eine einzige Fläche (48) wenigstens zwei Teile umfasst und dass sich die Fördereinrichtung (36) vertikal und horizontal translatorisch bewegen kann.

5. Vorrichtung nach einem der Ansprüche 1 bis 3, **dadurch gekennzeichnet, dass** die zwei Flächen (48) wenigstens zwei Teile umfassen und dass sich die Fördereinrichtung (36) wenigstens vertikal translatorisch bewegen kann.

6. Beutelabfüllkette, die Mittel (34) zum Abfüllen und/oder Verschließen, eine Fördereinrichtung (36), auf der sich Beutel (38), vorzugsweise nacheinander, translatorisch bewegen, und Mittel (40) zum Halten und Positionieren der Beutel, die aus zwei Flächen (48) gebildet sind, die sich auf der einen bzw. der anderen Seite einer vertikalen Achse (46) befinden, umfasst, **dadurch gekennzeichnet, dass** wenigstens eine der zwei Flächen (48) aus wenigstens zwei Teilen gebildet ist, wovon der untere Teil (50) zurückfahren kann, indem er sich von der Mittelachse (46) entfernt, wodurch die Aufnahme wenigstens eines Teils der Fördereinrichtung (36) am Ort der Mittel (40) ermöglicht wird.

7. Beutelabfüllkette nach Anspruch 6, **dadurch gekennzeichnet, dass** wenigstens eine der Flächen (48) aus übereinander befindlichen Elementen (52), die Relings genannt werden, gebildet ist.

8. Beutelabfüllkette nach Anspruch 7, **dadurch gekennzeichnet, dass** die übereinanderbefindlichen Elemente (52) unverbunden sind.

9. Beutelabfüllkette nach Anspruch 7 oder 8, **dadurch gekennzeichnet, dass** die Relings (42) wenigstens einer der Flächen (48) kinematisch verbunden sind und dass alle Relings mit einem Träger (54) verbunden sind, der sich horizontal translatorisch bewegen kann.

10. Beutelabfüllkette nach Anspruch 7 oder 8, **dadurch gekennzeichnet, dass** bestimmte Relings (52) wenigstens einer Fläche (48) kinematisch voneinander unabhängig sind und sich in Bezug auf einen Träger (56), der sich seinerseits horizontal translatorisch bewegen kann, horizontal translatorisch bewegen können.

## Claims

1. A device providing the movement of objects able to be positioned for height and with respect to a vertical axis, comprising a conveyor (36) on which objects (38) translate, and means (40) of holding the objects in position comprising two surfaces (48) each of them disposed on either side of the vertical axis (46), **characterised in that** at least one of the two surfaces (48) is formed from at least two parts, the lower part (50) of which is able to retract by moving away with respect to the median axis (46) so as to allow the housing of at least part of the conveyor (36) in line with said holding and positioning means (40).

2. A device according to claim 1, **characterised in that** at least one of the surfaces (48) is formed from superimposed elements (52).

3. A device according to claim 2, **characterised in that** the superimposed elements (52), referred to as rails, are separate.

4. A device according to any one of claims 1 to 3, **characterised in that** a single surface (42) comprises at.least two parts, and **in that** the conveyor (36) is able to translate vertically and horizontally.

5. A device according to any one of claims 1 to 3, **characterised in that** the two surfaces (48) comprise at least two parts and **in that** the conveyor (36) is able to translate at least vertically.

6. A bagging line comprising filling and/or closure means (34), a conveyor (36) on which bags (38) translate, preferably one behind the other, and means (40) of holding and positioning the bags comprising two surfaces (48), each of them disposed on either side of a vertical axis (46), **characterised in that** at least one of the two surfaces (48) is formed from at least two parts, the lower part (50) of which is able to retract by moving away with respect to the median axis (46) so as to allow the housing of at least part of the conveyor (36) in line with said means (40).

7. A bagging line according to claim 6, **characterised in that** at least one of the surfaces (48) is formed from superimposed elements (52), referred to as rails.

8. A bagging line according to claim 7, **characterised in that** the superimposed elements (52) are separate.

9. A bagging line according to claim 7 or 8, **characterised in that** the rails (52) and at least one of the surfaces (48) are kinematically connected and are all attached to a support (54) able to translate horizontally.

10. A bagging line according to claim 7 or 8, **characterised in that** some rails (52) of at least one surface (48) are kinematically independent, and can translate horizontally with respect to a support (56), itself able to translate horizontally.
